# EUROPEAN PATENT APPLICATION

(11) **EP 4 647 277 A1**
(43) Date of publication of application: **12.11.2025**
(21) Application number: 24175207.0
(22) Date of filing: 10.05.2024
(51) Int. Cl.: B60J 7/16

(54) **RETRACTABLE HARDTOP**

(71) Applicant: Koenigsegg Automotive AB, 262 91 Ängelholm (SE)
(72) Inventor: VON KOENIGSEGG, Christian, 266 54 VEJBYSTRAND (SE); DUBS, Steve, 266 53 VEJBYSTRAND (SE); LINDGREN, Kathryn Rose, SYRACUSE NY, 13215 (US); SCHÜÜRMANN, Kai, 252 36 HELSINGBORG (SE)
(74) Representative: Brann AB

(57) **Abstract**

A hardtop connector (16) for manipulating a retractable hardtop (14) relative to an automobile body (12) is proposed. The hardtop connector (16) comprises: a mechanical joint arrangement (18), and an actuator arrangement (20). The hardtop connector (16) is adapted to be connected to the hardtop (14) and the automobile body (12), the joint arrangement (18) and the actuator arrangement (20) are arranged to cooperate to rotate the hardtop (14) around a first axis (22) and around a second axis (24), and the second axis (24) is transverse to the first axis (22).

## Description

### TECHNICAL FIELD

The proposed technology generally relates to the field of convertibles or cabriolets, and specifically to retractable hardtops.

### BACKGROUND

An automobile roof is the portion of an automobile that sits above the passenger compartment and protects the vehicle occupants from sun, wind, rain, and other external elements. A hardtop is a rigid form of an automobile roof that is integral to the design, strength, and style of the vehicle. A detachable hardtop is generally understood as a hardtop that can be removed from the automobile, for example for storage in the trunk of the automobile. A retractable hardtop is generally understood as a rigid form of an automobile roof that can be retracted and stored in the automobile. Often the retractable hardtop is automatically operated and folded when stored.

### SUMMARY

It is an object of the proposed technology to provide a retractable hardtop that takes up less space when retracted, that is resilient to external elements when retracted, that can be retracted quickly, and that has a high structural strength.

In a first aspect of the proposed technology, a hardtop connector for manipulating a retractable hardtop relative to an automobile body, and the hardtop connector comprises: a mechanical joint arrangement, and an actuator arrangement, wherein the hardtop connector is adapted to be connected to the hardtop and the automobile body, and the joint arrangement and the actuator arrangement are arranged to cooperate to rotate the hardtop around a first axis and around a second axis, wherein the second axis is transverse to, or perpendicular to, the first axis. Worded differently, the hardtop connector is adapted to be connected to the hardtop and the automobile body, the joint arrangement is an articulated structure that has, or defines, a first axis and a second axis around which the hardtop can rotate relative to the automobile body, the second axis is transverse to the first axis, and the actuator arrangement is arranged to cooperate with the joint arrangement and rotate the hardtop around the first axis and the second axis.

In a second aspect of the proposed technology, an automobile is proposed that comprises: an automobile body, a retractable hardtop, and a hardtop connector.

The hardtop connector is arranged to manipulate the hardtop relative to the automobile body and comprises: a mechanical joint arrangement, and an actuator arrangement. The hardtop connector is connected to the hardtop and the automobile body, and the joint arrangement and the actuator arrangement are arranged to cooperate to rotate the hardtop around a first axis and around a second axis, wherein the second axis is transverse to, or perpendicular to, the first axis. Worded differently, the hardtop connector is connected to the hardtop and the automobile body, the joint arrangement is an articulated structure that has, or defines, a first axis and a second axis around which the hardtop can rotate relative to the automobile body, the second axis is transverse to the first axis, and the actuator arrangement is arranged to cooperate with the joint arrangement and rotate the hardtop around the first axis and the second axis.

Wording the second aspect of the proposed technology differently, an automobile is proposed that comprises: an automobile body, a retractable hardtop, and a hardtop connector according to the first aspect of the proposed technology. The hardtop connector is connected to the hardtop and the automobile body and arranged to manipulate the retractable hardtop relative to the automobile body.

Below, features of the hardtop connector are described in relation to the hardtop and the automobile body as part of automobile according to the second aspect of the proposed technology. It is understood that the features of the hardtop connector of the first aspect of the proposed technology may be adapted, arranged, or configured, to interact or function in a corresponding manner in relation to the hardtop and the automobile body.

An automobile body is here understood as the parts of an automobile that jointly forms the static structure of the automobile. It may include structures such as a chassis, a frame, a unibody, a monocoque, sub frames, a roll cage, fenders, bumpers, and a windshield. It is understood that the hardtop connector can be automatically operated, and that the retractable hardtop does not form part of the automobile body. It is further understood that the rotations around the first axis and around the second axis are relative to the automobile body. It is further understood that the joint arrangement may be arranged to support, or carry, the full weight of the hardtop, or to transfer a torque induced by the full weight of the hardtop to automobile body. For example, the joint arrangement may be of metal, such as aluminum alloy or steel.

It is understood that an automobile, or automobile body, has a front, a rear, a left side, and a right side. The hardtop connector may be oriented with the first axis aligned with, or parallel with, a planar surface carrying the automobile. The hardtop connector may be oriented with the first axis transverse to an intended forward direction of the automobile, or transverse to the left side and the right side of the automobile. The hardtop connector may be positioned at the middle between the left side and the right side of the automobile.

The automobile may have a passenger compartment. It is understood that a passenger compartment may be arranged, or intended, to carry a driver and/or a passenger. Worded differently, the passenger compartment may have a driver area intended for a driver and/or a passenger area intended for a passenger. The passenger compartment may have a front end and a rear end, and the hardtop connector may be located closer to the rear end than to the front end of the passenger compartment. It is understood that the front end of the passenger compartment is located closer to the front of the automobile than the rear end of the passenger compartment.

The first axis and the second axis may be coplanar. Worded differently, the first axis and the second axis may intersect, or the second axis may cross the first axis. Alternatively, the first axis and the second axis may be skew, or non-coplanar. Worded differently, the first axis and the second axis may be non-intersecting, or the second axis may spaced apart from the first axis.

The hardtop may be a rigid structure. This means that it is not composed of several articulated sections. It is understood that the hardtop may be a non-articulated structure. This means that the hardtop is not composed of several sections that can be separated or that are joined by hinges. This contributes to a higher structural strength of the hardtop as such, and in extension of the automobile.

The hardtop may have a forward position and a rearward position relative to the automobile body. It is understood that the forward position and the rearward position may be end positions. It is understood that the automobile has a front and a rear, and that in the forward position the hardtop is located closer to the front than in the rearward position. The hardtop connector may be adapted to transition, or more specifically automatically transition, the hardtop between the forward position and the rearward position. It is understood that this transition may be by a rotation around the first axis. Worded differently, the hardtop connector may be adapted transition the hardtop between the forward position and the rearward position, wherein the transition involves a rotation around the first axis. For example, the rotation around the first axis may be in the range 170° to 210°, or 180° to 200°.

It is understood that the forward position and the rearward position are the intended positions of the hardtop when driving the automobile. It is further understood that the hardtop may form a roof, or form part of a roof, over the passenger compartment in the forward position. The hardtop connector may be covered from above by the hardtop and the automobile body in the forward position. The hardtop may be removed from, or spaced apart from, the passenger compartment in the rearward position. The passenger compartment may be fully unblocked from above by the hardtop in the rearward position. The hardtop may be positioned behind the passenger compartment in the rearward position.

The hardtop may have a forward orientation in the forward position and a rearward orientation in the rearward position. It is understood that the forward orientation and the rearward orientation are relative to the automobile body. The hardtop connector may be adapted to transition, or more specifically automatically transition, the hardtop between the forward orientation and the rearward orientation. It is understood that this transition may be by a rotation around the first axis and a rotation around the second axis. Worded differently, the hardtop connector may be adapted to transition the hardtop between the forward orientation and the rearward orientation, wherein the transition involves a rotation around the first axis and a rotation around the second axis. The rotation around the first axis may be the same as the rotation at the transition between the forward position and the rearward position. The rotation around the second axis may be 180°. Worded differently, the hardtop connector may be adapted to transition, or more specifically automatically transition, the hardtop between the forward position and the rearward position and between the forward orientation and the rearward orientation. It is understood that this transition may be by a rotation around the first axis and a rotation around the second axis.

The hardtop may have an inner side and an outer side. It is understood that the outer side faces upwards and the inner side faces downwards in the forward position, or in the forward orientation. The outer side may face upwards and the inner side may face downwards in the rearward position, or in the rearward orientation. This contributes to a greater resilience of the hardtop when retracted.

The hardtop may have a front end and a rear end, or a first end and a second end. It is understood that the front end is closer to the front of the automobile body than the rear end in the forward position, or in the forward orientation. The front end may be closer to the rear of the automobile body than the rear end in the rearward position, or in the rearward orientation.

The outer side of the hardtop may as a whole outline a convex geometry. For example, the hardtop may have a first side edge and an opposite second side edge that extend, or at least in part extend, between the rear end and the front end of the hardtop. The hardtop may further have a rear edge at the rear end that connects the first side edge and the second side edge. The first side edge and the second side may be connected at the front end. Alternatively, the hardtop may further have a front edge at the front end that connects the first side edge and the second side edge. In the forward position, or forward orientation, of the hardtop, the outer side may taper downwards at and towards the first side edge and at and towards the second side edge. If the hardtop has a front edge, the outer side may taper downwards at and towards the front edge. Worded differently, in the forward position, or forward orientation, of the hardtop, the outer side may have an inclination at the first side edge that increases towards the first side edge and an inclination at the second side edge that increases towards the second side edge. If the hardtop has a front edge, the outer side may have an inclination at the front edge that increases towards the front edge.

With the positions, orientations, and shapes described above, the hardtop allows for a more rounded profile at the rear of the automobile with the hardtop in the rearward position and orientation. In other words, when the hardtop is retracted, it can be arranged to take up less space in an automobile that has a rounded profile at the rear.

The hardtop connector may comprise a control unit operationally coupled to actuator arrangement. It is understood that the control unit is arranged to operate, or control the function of, the actuator arrangement. It is further understood that the control unit can supply the actuator arrangement with power, for example electric power, hydraulic power, or pneumatic power, that is converted to by the actuator arrangement to a force, torque, or displacement that actuates the hardtop connector. The control unit may be arranged to automatically operate the hardtop connector, or the actuator arrangement, to rotate the hardtop around a first axis and around a second axis. More specifically, the control unit may be arranged to automatically operate the hardtop connector, or the actuator arrangement, to transition the hardtop between the forward position and the rearward position, and optionally to transition the hardtop between the forward orientation and the rearward orientation.

It is specified that the joint arrangement and the actuator arrangement are arranged to cooperate to rotate the hardtop around the first axis and around the second axis. The joint arrangement may be arranged to allow a rotation of the hardtop around the first axis that is unconstrained by the joint arrangement as such. Similarly, the joint arrangement may be arranged to allow a rotation of the hardtop around the second axis that is unconstrained by the joint arrangement as such. Arranged this way, the joint arrangement as such allows for any number of turns around respective axis. It is understood that the rotations around the axes may be constrained in other ways, for example by the automobile body or by the actuator arrangement.

The first axis may be fixed relative to the automobile body, and the second axis may be rotatable relative to the first axis, or relative to the automobile body. Worded differently, the first axis may be fixed relative to the automobile body at a transition between the forward position and the rearward position of the hardtop, and the second axis may rotate relative to the first axis, or relative to the automobile body, at a transition between the forward position and the rearward position of the hardtop.

The hardtop connector, or the joint arrangement, may have a first revolute joint and a second revolute joint, wherein the first revolute joint is arranged to allow the hardtop to rotate around the first axis and the second revolute joint is arranged to allow the hardtop to rotate around the second axis. The first revolute joint may have a fix position relative to the automobile body, and the hardtop connector, or more specifically the actuator arrangement, may be arranged to rotate the second revolute joint relative to the first axis, or the first revolute joint. Worded differently, the first revolute joint may have a fixed positioned relative to the automobile body at a transition between the forward position and the rearward position, or between the forward orientation and the rearward orientation, of the hardtop, and the second revolute joint may rotate relative to the first axis, the first revolute joint, or the automobile body, at a transition between the forward position and the rearward position, or between the forward orientation and the rearward orientation, of the hardtop.

The hardtop connector, or the joint arrangement, may have a first bracket, or body support, wherein the first bracket connects the hardtop connector, or joint arrangement, or first revolute joint, to the automobile body. Similarly, the hardtop connector, or the joint arrangement, may have a second bracket, or hardtop support, wherein the second bracket connects the hardtop connector, or joint arrangement, to the hardtop. It is understood that the first revolute joint may be positioned between the first bracket and the second bracket, and the second revolute joint may be positioned between the first revolute joint and the second bracket. It is understood that the first bracket may have a fix position relative to the automobile body, and the hardtop connector may be arranged to rotate the second bracket relative to the first axis, or the first bracket. It is understood that the second bracket may have a fix position relative to the hardtop. Worded differently, the first bracket may have a fixed positioned relative to the automobile body at a transition between the forward position and the rearward position, or between the forward orientation and the rearward orientation, of the hardtop, and the second bracket may rotate relative to the first axis, the first bracket, or the automobile body, at a transition between the forward position and the rearward position, or between the forward orientation and the rearward orientation, of the hardtop.

It is specified that the hardtop may have a front end and a rear end. The hardtop connector, or the joint arrangement, may be connected to the hardtop at the rear end of the hardtop. More specifically, the second bracket may connect the hardtop connector, or the joint arrangement, to the hardtop at the rear end of the hardtop.

The hardtop may have one or more intermediate positions between the forward position and the rearward position. It is understood that hardtop reaches the intermediate positions in a transition between the forward position and the rearward position. It is further understood that the intermediate positions are relative to the automobile body, and that the one or more positions may form a continuous range of intermediate positions. The hardtop connector may be adapted to transition, or more specifically automatically transition, the hardtop between the forward position and the rearward position via the intermediate positions. It is understood that this transition may be by a rotation around the first axis.

The hardtop may have a clearance to, or be spaced apart from, the automobile body, or the rest of the automobile, in the intermediate positions at a rotation around the second axis. Worded differently, the hardtop may have a clearance in the intermediate positions allowing at a rotation of the hardtop around the second axis. The rotation may be a half turn rotation, or a full turn rotation, around the second axis. More specifically, the hardtop may have a clearance to, or be spaced apart from, the automobile body, or the rest of the automobile, at a 180° rotation, or a 360° rotation, around the second axis. Worded differently, the automobile body, the hardtop, and the hardtop connector may be arranged to allow a rotation of the hardtop around the second axis that is unconstrained by the automobile body, or the rest of the automobile, in the intermediate positions of the hardtop.

The hardtop connector, or more specifically the joint arrangement, may have, or form, an arm, or beam, that extends transversely, or perpendicularly, to the first axis. It is understood that the arm and the first axis may be coplanar or non-coplanar. It is further understood that the arm may be elongated. The second bracket may be connected to, or form part of, the arm. It is understood that the arm may space the hardtop, or the second bracket, apart from the first axis. The arm may be arranged to establish the clearance to the automobile body in the intermediate positions of the hardtop.

The hardtop connector, the joint arrangement, or the first revolute joint, may be arranged to rotate the arm relative to the first axis, the first bracket, or the automobile body. Worded differently, the arm may rotate relative to the first axis, the first bracket, or the automobile body, at a transition between the forward position and the rearward position of the hardtop. The second revolute joint may form part of the arm.

The hardtop, or the second bracket, may have a fix position relative to second axis, or to the arm. The joint arrangement may have, or form, a lever arrangement, arranged to allow the hardtop, or second bracket, to tilt relative to the second axis, or relative to the arm. The hardtop may have a closed inclination, or first inclination, and an open inclination, or second inclination, relative to the second axis, the arm, or the hardtop connector. The lever arrangement may be adapted to transition the hardtop from the closed inclination to the open inclination at a transition from the forward position to the rearwards position. Worded differently, the lever arrangement may be adapted to transition the hardtop from the closed inclination to the open inclination at a transition from the forwards position to the rearward position.

The joint arrangement, or more specifically the lever arrangement, may be arranged to tilt the hardtop around a third axis relative to the second axis, relative to the arm, or relative to the automobile body. This way, the joint arrangement is arranged to rotate the hardtop, or the second bracket, with three degrees-of freedom relative to the first axis, or relative to the automobile body, or the first bracket. The hardtop connector may be adapted to transition, or more specifically automatically transition, the hardtop between the closed inclination and the open inclination. It is understood that this transition may be by a rotation around the first axis and the third axis. The lever arrangement, or more specifically the third axis, may have a fix position and/or orientation relative to the second bracket, or the hardtop. The joint arrangement, or more specifically the lever arrangement, may have a third revolute joint, wherein the third revolute joint is arranged to allow the hardtop to tilt around the third axis. The third revolute joint may have a fix position relative to the hardtop. Worded differently, the third revolute joint may have a fixed positioned relative to the hardtop at a transition between the forward position and the rearward position of the hardtop. The third axis may be fixed relative to the hardtop.

The third axis may be transverse to, or perpendicular to, the second axis, or to the arm. The first axis and the third axis may be aligned, or parallel, in the forward position and the rearward position, or in the forward orientation and the rearward orientation, of the hardtop. It is specified that the joint arrangement and the actuator arrangement are arranged to cooperate to rotate the hardtop around a first axis and around a second axis. In extension, the joint arrangement and the actuator arrangement may be arranged to cooperate to rotate the lever arrangement, the third, revolute joint, or third axis, around the first axis and the second axis.

The joint arrangement, or lever arrangement, may be arranged to allow a rotation, or tilting, of the hardtop around the third axis that is constrained by the joint arrangement., or lever arrangement, as such. Worded differently, the joint arrangement as such may constrain a rotation, or tilting, of the hardtop around the third axis. More specifically, the joint arrangement may constrain a rotation, or tilting, of the hardtop around the third axis to less than, or within, 20°.

More specifically, the lever arrangement may be arranged to allow a tilting of the hardtop, for example around the third axis, that is constrained by the lever arrangement as such. Worded differently, the lever arrangement as such may constrain a tilting of the hardtop, for example around the third axis. More specifically, the lever arrangement may constrain a tilting of the hardtop between the close orientation and the open inclination. For example, the tilting may be less than, or within, 20°, or less than, or within, 10°.

The lever arrangement may be arranged to bias the hardtop to be in the open inclination. For example, the lever arrangement may have a spring arrangement that biases the hardtop to be in the open inclination.

The spring arrangement may have a first lever section and a second lever section that are rigid and connected by the third revolute joint. It is understood that the first lever section and the second lever section may form part of the arm of the joint arrangement. It is further understood that the third revolute joint may form part of the spring arrangement. The first lever section may form a cam that has a control surface. The spring arrangement may further have a follower and a spring that biases the follower against the control surface of the cam. The follower is rotationally fixed relative to the second lever section. The cam, follower, and spring are arranged to cooperate to bias the first lever section to be in a start orientation relative to the second lever section. The third revolute joint may be coupled to the first bracket via the first lever section and to the second bracket via the second lever section, or the third revolute joint may be coupled to the first bracket via the second lever section and to the second bracket via the first lever section. It is understood that the spring arrangement may bias the hardtop to be in the open inclination when the first lever section is biased to be in a start orientation relative to the second lever section. Worded differently, the hardtop may be in the open inclination when the first lever section in the start orientation relative to the second lever section.

It is understood that the hardtop may transition between the closed inclination and the open inclination at the forward position of the hardtop. The hardtop may be fully closed in the closed inclination and the forward position of the hardtop. In the forward position, the hardtop may transition between the closed inclination and the open inclination at a rotation around the first axis and a rotation around the third axis.

It is specified that the hardtop may have a front end and a rear end. In the forward position and the closed inclination, the hardtop may contact the automobile body at the front end and the rear end of the hardtop. In the forward position and the open inclination, the hardtop may contact the automobile body at the front end of the hardtop and have a clearance to the automobile body at the rear end of the hardtop. The lever arrangement may be arranged to bias the front end of the hardtop against the automobile body, for example against the windshield, in the forward position and at a transition between the closed inclination and the open inclination.

The third axis, or third revolute joint, may be located at a lower level than the first axis, or first revolute joint, in the forward position and closed inclination of the hardtop. The third axis, or third revolute joint, may be located at the same level as the first axis, or first revolute joint, in the forward position and open inclination of the hardtop. The hardtop may move forward at a transition from the closed inclination to the open inclination in the forward position of the hardtop.

The actuator arrangement may comprise a first actuator and a second actuator. The first actuator may be a rotary actuator that has a stator and a rotor. For example, first rotary actuator may be an electric motor. Similarly, the second actuator may be a rotary actuator. The second actuator may have a stator and a rotor. For example, second rotary actuator may be an electric motor. It is understood that the first actuator may be arranged to supply a first torque, or first input torque, to the joint arrangement and that the second actuator may be arranged to supply a second torque, or second input torque, to the joint arrangement. It is further understood that the joint arrangement may be arranged to convert the first torque and/or the second torque to a first output torque for rotating the hardtop around the first axis and/or a second output torque for rotating the hardtop around the second axis.

It is specified above that the hardtop connector may comprise a control unit operationally coupled to actuator arrangement. The control unit may be operationally coupled to each of the first actuator and the second actuator. The control unit may be arranged to operate, or control the function of, the first actuator and to operate, or control the function of the second actuator, independently from one another. It is further understood that the control unit may supply the first actuator with power that is converted by the first actuator to a force, torque, or displacement that actuates the hardtop connector, and that it may independently supply the second actuator with power that is converted by the second actuator to a force, torque, or displacement that actuates the hardtop connector.

It is specified that the joint arrangement and the actuator arrangement are arranged to cooperate to rotate the hardtop around the first axis and around the second axis. The first actuator and the second actuator may be arranged to cooperate to rotate the hardtop around the first axis only, around the second axis only, and around the first axis and the second axis simultaneously.

The joint arrangement, or the second revolute joint, may comprise a gear mechanism. The gear mechanism may be arranged to receive a first torque from the first actuator and a second torque from the second actuator, and to convert the first torque and/or the second torque to rotate the hardtop, or the second bracket, around the second axis. The second bracket may be coupled to the gear mechanism. The gear mechanism may be arranged to convert the first torque and/or the second torque to an output torque that rotates the hardtop around the second axis. It is understood that the gear mechanism may be, or form part of, the second revolute joint.

The gear mechanism may have a first input gear, a second input gear, and an output gear. The first input gear meshes with the output gear and the second input gear meshes with the output gear. The first input gear and the second input gear may have the same number of teeth. Worded differently, the joint first input gear and output gear and the joint second input gear and output gear may define the same gear ratio.

The first input gear may be coupled to the first actuator. The second input gear may be coupled to the second output gear. The output gear may be coupled to the second bracket, to the third revolute joint, or to the hardtop. Here, if two components are coupled, it is understood that there may be additional components therebetween. For example, there may be additional components between the first input gear and the first actuator, between the second input gear and the second output gear, and between the output gear and the second bracket. It is understood that the first input gear, the second input gear, and the output gear may be bevel gears. The first input gear and the second input gear may be centered on the first axis. The output gear may be centered on the second axis. The first input gear and the second input gear may be position, or mesh with the output gear, on opposite sides of the output gear.

The joint arrangement, or the gear mechanism, may have a first input shaft, a second input shaft, and an output shaft. The first input shaft is connected to the first input gear, the second input shaft is connected to the second input gear, and the output shaft is connected to the output gear. It is understood that the first input shaft and the second input shaft may be centered on the first axis. Similarly, the that the output shaft may be centered on the second axis. It is understood that the first input shaft and the second input shaft may extend in opposite directions relative to the output gear, or relative to the output shaft. It is further understood that the output shaft may extend transversely, or perpendicular, the first input shaft and the second input shaft. It is further understood that the gears are fixed relative to the shafts to which they are connected.

It is specified that the first input gear may be coupled to the first actuator and that the second input gear may be coupled to the second output gear. It is further specified that the first actuator may be arranged to supply a first torque and that the second actuator may be arranged to supply a second torque for rotating the hardtop around the first axis and/or the second axis. The first actuator may be arranged to supply the first torque to the first input gear, and the second actuator may be arranged to supply the second torque to the second input gear.

It is specified that the first actuator may be a rotary actuator that has a stator and a rotor and that the second actuator may be a rotary actuator that has a stator and a rotor. The rotor of the first actuator may be centered on the first axis, and the first input gear may be connected directly to the first actuator. Alternatively, the first input gear may be coupled to the first actuator via the first input shaft. The rotor of the first actuator may be centered on the first axis, and the first input shaft may be connected directly to the rotor of the first actuator. Alternatively, the hardtop connector may have a first geartrain and the first input shaft is coupled to the rotor of the first actuator via the first geartrain. Similarly, The rotor of the second actuator may be centered on the first axis, and the second input gear may be connected directly to the second actuator. Alternatively, the second input gear may be coupled to the second actuator via the second input shaft. The rotor of the second actuator may be centered on the first axis, and the second input shaft may be connected directly to the rotor of the second actuator. Alternatively, the hardtop connector may have a second geartrain and the second input shaft is coupled to the rotor of the second actuator via the second geartrain. It is understood that the gear mechanism may be positioned between the first bracket and the second bracket. The second bracket may be coupled to the output shaft. The second bracket may be coupled to the output shaft via the third revolute joint.

The joint arrangement, or gear mechanism, may comprise a support structure, or gear carrier. The support structure is rigid and rotationally supports the first input gear, second input gear, and output gear. The support structure may rotationally support the first input gear, second input gear, and output gear via the first input shaft, second input shaft, and output shaft. It is understood that the support structure can rotate around the first axis. It is understood that the support structure may fix the positions of the first input gear, the second input gear, and the output gear fixed relative to one another. The gear mechanism may be arranged to receive a first torque from the first actuator and a second torque from the second actuator, and to convert the first torque and/or the second torque to rotate the hardtop, second bracket, or support structure, around the first axis.

The support structure may extend into, or through, the first input gear, the second input gear, and/or the output gear. In other words, the support structure may be an internal support structure relative to the gears. The support structure may further extend into, or through, the first input shaft, the second input shaft, and/or the output shaft. Alternatively, the first input shaft, the second input shaft, and/or the output shaft may extend through the support structure. In other words, the support structure may be an external support structure relative to the gears.

It is specified above that the hardtop connector may have an arm that extends transversely to the first axis. It is understood that the output shaft, the second bracket, the third revolute joint, and/or the support structure may form part of the arm.

It is specified above that the hardtop connector, or the joint arrangement, may have a first revolute joint, wherein the first revolute joint is arranged to allow the hardtop to rotate around the first axis. The first revolute joint, or a first joint part of the first revolute joint, may be connected to the first input shaft and the first revolute joint, or a second joint part of the first revolute joint may be connected to the second input shaft. It is specified that the hardtop connector may have a first bracket that connects the first revolute joint to the automobile body. The first bracket, or a first bracket part of the first bracket, may be connected to the first revolute joint, or the first joint part of the first revolute joint, and the automobile body, and the first bracket, or a second bracket part of the first bracket, may be connected to the first revolute joint, or the second joint part of the first revolute joint, and the automobile body. Alternatively, the first actuator may form a part of the first revolute joint. Similarly, the second actuator may form part of the first revolute joint. The first actuator and the second actuator may jointly form the first revolute joint. The first bracket, or a first bracket part of the first bracket, may be connected to the first actuator, or the stator of the first actuator, and the automobile body. Worded differently, the first actuator may be positioned between the first bracket, or a first bracket part of the first bracket, and the gear mechanism, or the second bracket. Similarly, the first bracket, or a second bracket part of the first bracket, may be connected to the second actuator, or the stator of the second actuator, and the automobile body. Worded differently, the second actuator may be positioned between the first bracket, or a second bracket part of the first bracket, and the gear mechanism, or the second bracket.

The features described here jointly contribute to a secure and quick transition of the hardtop between the forward position and the rearward position, and between the forward orientation and the rearward orientation.

It is specified above that the hardtop connector may comprise a control unit operationally coupled to actuator arrangement. The control unit may be arranged to operate the first actuator and the second actuator independently from one another. The control unit may have a first mode of operation in which the control unit operates the first actuator and the second actuator to rotate the first input gear and the second input gear at the same rate, or synchronously, and in the same direction relative to the first axis. With the above-described architecture, this will cause the hardtop to rotate around first axis. The control unit may have a second mode of operation in which the control unit operates the first actuator and the second actuator to rotate the first input gear and the second input gear at different rates, or asynchronously, and in the same direction relative to the first axis. With the above-described architecture, this will cause the hardtop to rotate around first axis and around the second axis. The control unit may have a third mode of operation in which the control unit operates the first actuator and the second actuator to rotate the first input gear and to hold the second input gear still, or vice versa. With the above-described architecture, this will cause the hardtop to rotate around first axis and around the second axis. For the same rotational rate of the first input gear, the rotation around the first axis will be slower and the rotation around the second axis will be faster than in the second mode of operation. The control unit may have a fourth mode of operation in which the control unit operates the first actuator and the second actuator to rotate the first input gear and the second input gear at the same rate and in opposite directions. With the above-described architecture, this will cause the hardtop to rotate around second axis. The control unit may have a fifth mode of operation in which the control unit operates the first actuator and the second actuator to rotate the first input gear and the second input gear at different rates and in opposite directions. With the above-described architecture, this will cause the hardtop to rotate around first axis and around the second axis. The direction of the rotation around the first axis will be the same as for the input gear that has the highest rotational rate. For the same rotational rates of the first input gear and the second input gear, the rotation around the first axis will be slower and the rotation around the second axis will be faster than in the second mode of operation.

It is specified that the first actuator and the second actuator may be arranged to cooperate to rotate the hardtop around the first axis only, around the second axis only, and around the first axis and the second axis simultaneously. Alternatively, the first actuator may be arranged to rotate the hardtop around the first axis independently from the second actuator, and the second actuator may be arranged to rotate the hardtop around the second axis independently from the first actuator.

The joint arrangement may comprise a support structure that is rigid and arranged to rotate around the first axis. It is specified above that the hardtop connector may have an arm that extends transversely to the first axis. It is understood that the support structure may form part of the arm.

It is specified that the first actuator may be a rotary actuator that has a stator and a rotor and that the second actuator may be a rotary actuator that has a stator and a rotor. It is further specified that the first actuator may be arranged to supply a first torque and that the second actuator may be arranged to supply a second torque for rotating the hardtop around the first axis and/or the second axis. The first actuator may be arranged to supply the first torque to the support structure. The support structure may be connected to the first actuator. For example, the support structure may be connected directly to the rotor of the first actuator. The rotor of the first actuator may be centered on the first axis. Alternatively, the hardtop connector may have a first geartrain, and the support structure may be coupled to the rotor of the first actuator via the first geartrain.

It is specified above that the hardtop connector, or the joint arrangement, may have a first revolute joint that is arranged to allow the hardtop to rotate around the first axis. The first revolute joint may be arranged to allow the support structure to rotate around the first axis. The support structure may be coupled to the automobile body via the first revolute joint. It is also specified above that the hardtop connector may have a first bracket that connects the hardtop connector to the automobile body. The support structure may be coupled to the automobile body via the first bracket. The first revolute joint may be connected directly to the support structure and to the first bracket. The first actuator may form part of the first revolute joint. The first bracket, or a first bracket part of the first bracket, may connect the stator of the first actuator to the automobile body.

It is specified that the first actuator may be arranged to supply a first torque and that the second actuator may be arranged to supply a second torque for rotating the hardtop around the first axis and/or the second axis. The support structure may be connected to the second revolute joint. The second revolute joint may be connected to the second bracket, or to the lever arrangement, or the third revolute joint, if present. The second actuator may be arranged to supply the second torque to the joint arrangement between the support structure, or the second revolute joint, and the second bracket, or between the support structure, or the second revolute joint, and the lever arrangement, or the third revolute joint, if present. The second actuator may be supported by the joint arrangement. For example, the stator may be fixed to the support structure. The second actuator may form part of the second revolute joint. More specifically, the stator may be connected to the support structure and the rotor may be connected to the second bracket, or to the lever arrangement, or the third revolute joint, if present. Alternatively to the second actuator forming part of the second revolute joint, the hardtop connector may have a second geartrain that connects the rotor of the second actuator to the joint arrangement between the support structure, or the second revolute joint, and the second bracket, or between the support structure, or the second revolute joint, and the lever arrangement, or the third revolute joint, if present.

Alternatively, the support structure may be connected to the lever arrangement, or third revolute joint. The lever arrangement, or third revolute joint, may be connected to the second revolute joint, and the second revolute joint may be connected to the second bracket. The second actuator may be arranged to supply the second torque to the joint arrangement between the support structure, or the lever arrangement, or third revolute joint, and the second bracket. The second actuator may be supported by the joint arrangement. For example, the stator may be fixed to joint arrangement between the lever arrangement, or the third revolute joint, and the second revolute joint. The second actuator may form part of the second revolute joint. More specifically, the stator may be connected to the lever arrangement, or the third revolute joint, and the rotor may be connected to the second bracket. Alternatively to the second actuator forming part of the second revolute joint, the hardtop connector may have a second geartrain that connects the rotor of the second actuator to the joint arrangement between the second revolute joint and the second bracket. Alternatively to the second actuator being supported by the joint arrangement, the second actuator may be supported by hardtop. For example, the stator of the second actuator may be fixed to the hardtop and the hardtop connector may have a second geartrain that connects the rotor of the second actuator to the joint arrangement between the third revolute joint and the second revolute joint.

The features described here jointly contribute to a secure and quick transition of the hardtop between the forward position and the rearward position, and between the forward orientation and the rearward orientation.

It is specified above that the hardtop connector may comprise a control unit operationally coupled to actuator arrangement, and that the control unit may be arranged to operate the first actuator and to operate the second actuator independently from one another. The control unit may have a first mode of operation in which the control unit operates only the first actuator. With the above-described architecture, this will cause the hardtop to rotate around first axis. The control unit may have a second mode of operation in which the control unit operates only the second actuator. With the above-described architecture, this will cause the hardtop to rotate around second axis. The control unit may have a third mode of operation in which the control unit operates both the first actuator and the second actuator. With the above-described architecture, this will cause the hardtop to simultaneously rotate around first axis and the second axis.

### BRIEF DESCRIPTION OF THE DRAWINGS

A more complete understanding of the abovementioned and other features and advantages of the proposed technology will be apparent from the following detailed description of preferred embodiments of the proposed technology in conjunction with the appended drawings, wherein:
Fig. 1 is a schematic side view of an embodiment of automobile having an automobile body, a retractable hardtop, and a hardtop connector.
Fig. 2 is a schematic front view of the hardtop connector of the automobile of Fig. 1.
Figs. 3a and 3b are perspective views of the mechanical joint arrangement of the hardtop connector of Fig. 2.
Fig. 4 is a perspective view of the showing the mechanical joint arrangement of Figs. 3a and 3b mounted on the hardtop.
Figs. 5a to 5h are side views of the windscreen, the hardtop, and the mechanical joint arrangement with the sequence showing the transition of the hardtop from the forward position to the rearward position.
Figs. 6 to 9 are schematic front views of alternative hardtop connectors.
Figs. 10a and 10b are a schematic front view respective a schematic side view of an alternative hardtop connector.

### DETAILED DESCRIPTION OF THE DRAWINGS

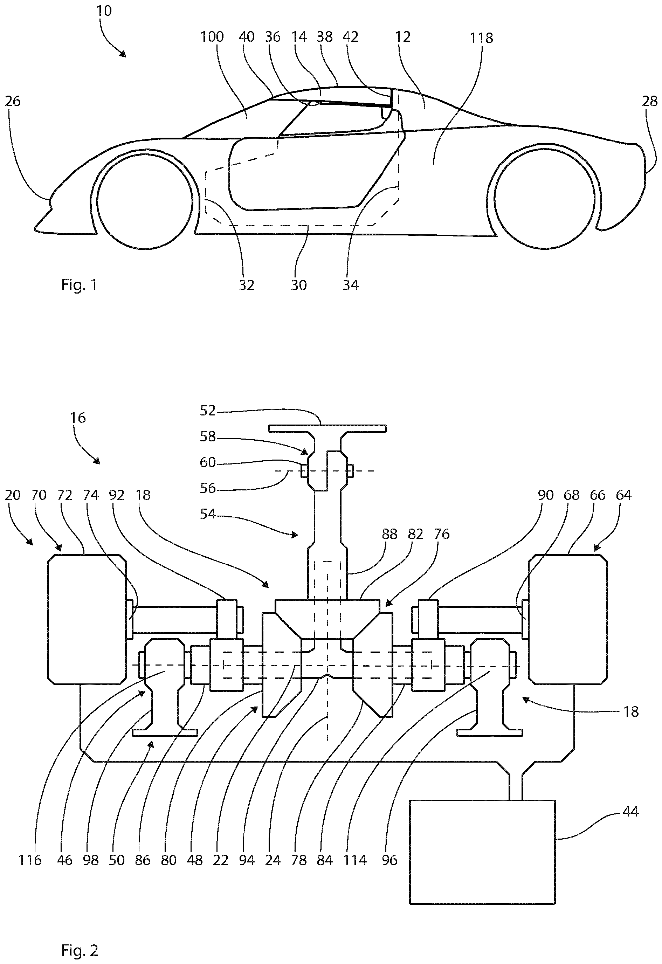

An embodiment of an automobile 10 is shown in **Fig. 1****.** The automobile 10 has an automobile body 12 that includes a monocoque with front and rear sub frames (not shown) and a windshield 100. The automobile body 12 has a front 26, a rear 28, a left side (118), and a right side (not shown). The automobile 10 further has a retractable hardtop 14 that is a rigid structure. The hardtop 14 is shown in its forward position in Fig. 1 is which it forms a roof over the passenger compartment 30.

With reference to **Fig. 2****,** the automobile 10 has a hardtop connector 16 that is connected hardtop 14 and the monocoque of the automobile body 12. The hardtop connector 16 can carry the full weight of the hardtop 14 and manipulate the hardtop 14 relative to the automobile body 12. More specifically, it can rotate the hardtop 14 around a first axis 22 and a second axis 24 relative to the automobile body 12, as is explained below.

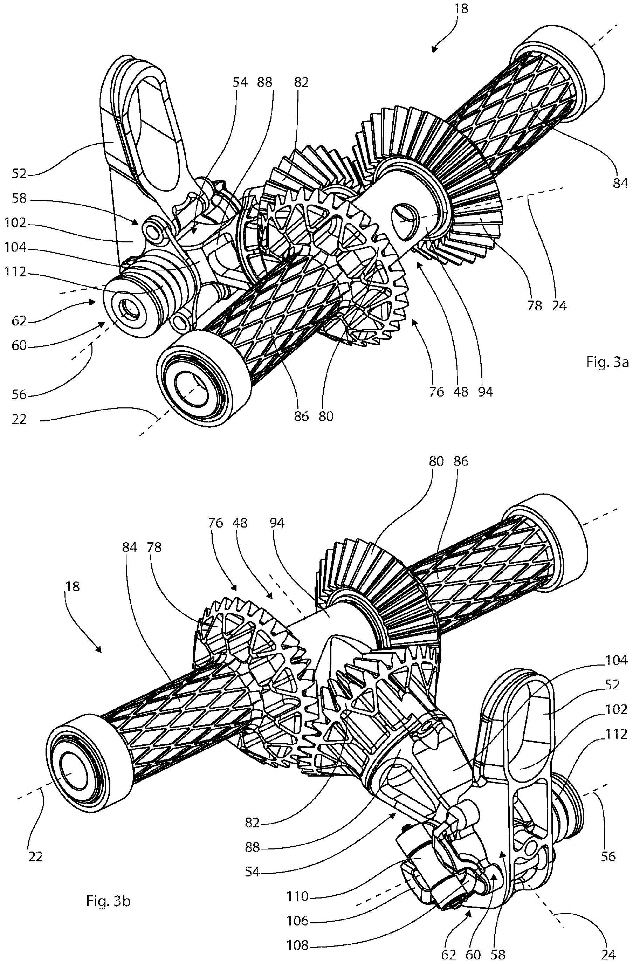

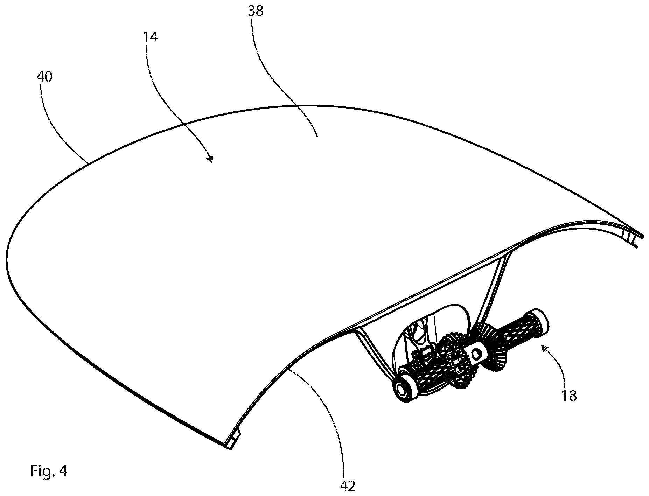

The hardtop connector 16 has a mechanical joint arrangement 18 and an actuator arrangement 20. Details of the joint arrangement 18 are shown in **Figs. 3a and 3b****.** The hardtop connector 16 is positioned at the middle between the left side and the right side of the automobile 10, as indicated in **Fig. 4** showing how the mechanical joint arrangement is connected to the hardtop 14. The passenger compartment 30 has a front end 32 and a rear end 34, and the hardtop connector 16 is located closer to the rear end 34 than to the front end 32 of the passenger compartment 30.

The joint arrangement 18 of the hardtop connector 16 has an elongated arm 54 that extends transversely to and is coplanar with the first axis 22. The joint arrangement 18 further has a first bracket 50 and a second bracket 52. The first bracket 50 connects the joint arrangement 18 to the monocoque of the automobile body 12 and the second bracket 52 connects the joint arrangement 18 to the hardtop 14 at the rear end 42 of the hardtop 14. The second bracket 52 forms part of the arm 54, and the arm 54 spaces the hardtop 14 and the second bracket 52 apart from the first axis 22. The first bracket 50 has a fix position relative to the automobile body 12 and the second bracket 52 has a fix position relative to the hardtop 14. The joint arrangement 18 has a first revolute joint 46 and a second revolute joint 48 that are positioned between the first bracket 50 and the second bracket 52. The first revolute joint 46 allows the second revolute joint 48, second bracket 50, arm 54, and hardtop 14 to rotate around the first axis 22 relative to the first bracket 50 and the automobile body 12. The second revolute joint 48 allows the second bracket 52 and the hardtop 14 to rotate around the second axis 24 relative to the first bracket 50 and the automobile body 12. The second axis 24 is transverse to the first axis 22. The hardtop connector 16 is oriented with the first axis 22 aligned with a planar surface carrying the automobile 10 transverse to the intended forward direction of automobile 10, which is perpendicular to the planar view of Fig. 1.

The joint arrangement 18 has a lever arrangement 58 with a third revolute joint 60 that allow the hardtop 14 to rotate around a third axis 56 and tilt relative to the second axis 24. The third revolute joint 60 and the third axis 56 have a fixed positioned relative to the second bracket 50 and the hardtop 14. The third axis 56 is transverse to the second axis 24. The lever arrangement 58 allows a tilting of the hardtop 14 around the third axis 56 that is constrained by the lever arrangement as such to be less than 10°.

The joint arrangement 18 and the actuator arrangement 20 are arranged to cooperate to rotate the hardtop 14 around the first axis 22 and around the second axis 24. The rotations are relative to the automobile body 12. The actuator arrangement 20 has a first actuator 64 and a second actuator 70 that are individually connected to a control unit 44. The first actuator 64 is a rotary actuator in the form of an electric motor that has a stator 66 and a rotor 68. The second actuator 70 is also a rotary actuator in the form of an electric motor that has a stator 72 and a rotor 74. The control unit 44 can supply electric power to each of the first actuator 64 and the second actuator 70 and is arranged to operate the first actuator 64 and the second actuator 70 independently from one another. This way, the control unit 44 can control the function of the actuator arrangement 20 and automatically operate the hardtop connector 16 to rotate the hardtop 14 around the first axis 22 and around the second axis 24.

The joint arrangement 18 of the hardtop connector 16 has a gear mechanism 76 that can receive a first torque from the first actuator 64 and a second torque from the second actuator 70 and convert the first torque and the second torque to an output torque that rotates the second bracket 52, an in extension the hardtop 14 around the first axis 22 and/or around the second axis 24.

The gear mechanism 76 has a first input gear 78, a second input gear 80, and an output gear 82 in the form of bevel gears. The first input gear 78 meshes with the output gear 82 and the second input gear 80 meshes with the output gear 82. The first input gear 78 and the second input gear 80 are positioned on opposite sides of the output gear 82. The joint arrangement 18 further has a first input shaft 84, a second input shaft 86, and an output shaft 88. The first input shaft 84 is connected to the first input gear 78, the second input shaft 86 is connected to the second input gear 80, and the output shaft 88 is connected to the output gear 82. The first input shaft 84 and the second input shaft 86 extend in opposite directions relative to the output gear 82 and are rotationally supported by the first revolute joint 46. The output shaft 88 extend transversely to the first input shaft 84 and the second input shaft 86. The first input gear 78, first input shaft 84, second input gear 80, and second input shaft 86 are centered on the first axis 22. The output shaft 88 forms part of the arm 54 and the output gear 82 is coupled to the second bracket 52 via the output shaft 88. The output gear 82 and the output shaft 88 are centered on the second axis 24, and the first input gear 78. This way, the first axis 22 and the second axis 24 are coplanar, and the first axis 22 is fixed relative to the automobile body 12, and the second axis 24 is rotatable relative to the first axis 22 and the automobile body 12.

The first input gear 78 is coupled to the rotor 68 of the first actuator 64 via the first input shaft 84 and a first geartrain 90, and the second input gear 80 is coupled to the rotor 74 of the second actuator 66 via the second input shaft 86 and a second geartrain 92. A first joint part 114 of the first revolute joint 46 is connected to the first input shaft 84, and a second joint part 116 of the first revolute joint 46 is connected to the second shaft 86. The first bracket 50 has a first bracket part 96 and a second bracket part 98, and the first bracket part 96 connects the first joint part 114 to the automobile body (not shown) and the second bracket part 98 connects the second joint part 116 to the automobile body (not shown). This way, the first actuator 64 is arranged to supply a first torque to the first input gear 78 and that the second actuator 66 is arranged to supply a second torque to the second input gear 80 for rotating the hardtop around the first axis 22 and/or the second axis 24.

The gear mechanism 76 has a rigid support structure 94 that functions as a gear carrier and rotationally supports the first input gear 78, second input gear 80, and output gear 82. The support structure 94 can rotate around the first axis 22 and extend through the first input gear 78 into the first input shaft 84, through the second input gear 80 into the second input shaft 86, and through the output gear 82 into the output shaft 88. In this way, the support structure 94 is an internal support structure that fixes the positions of the first input gear 78, the second input gear 80, and the output gear 82 fixed relative to one another.

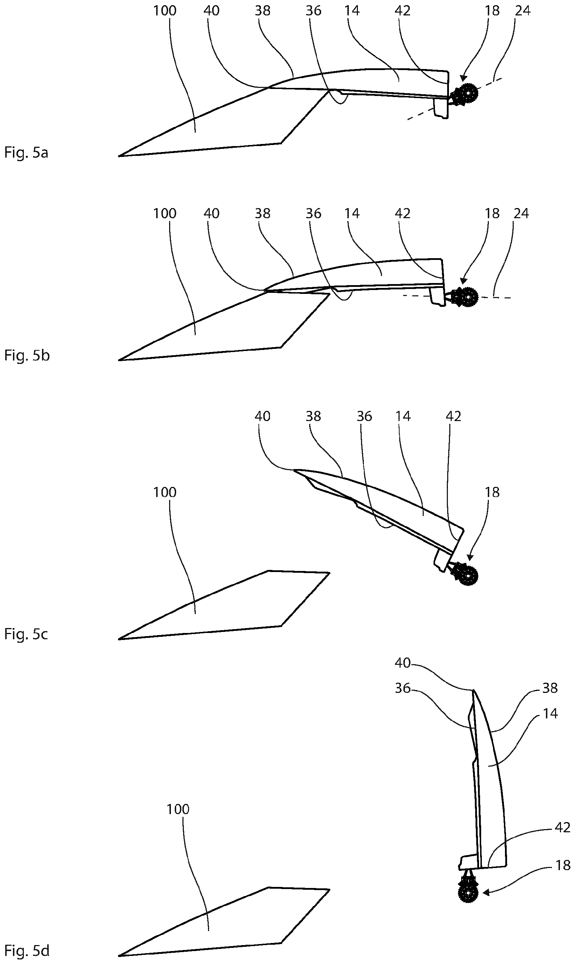

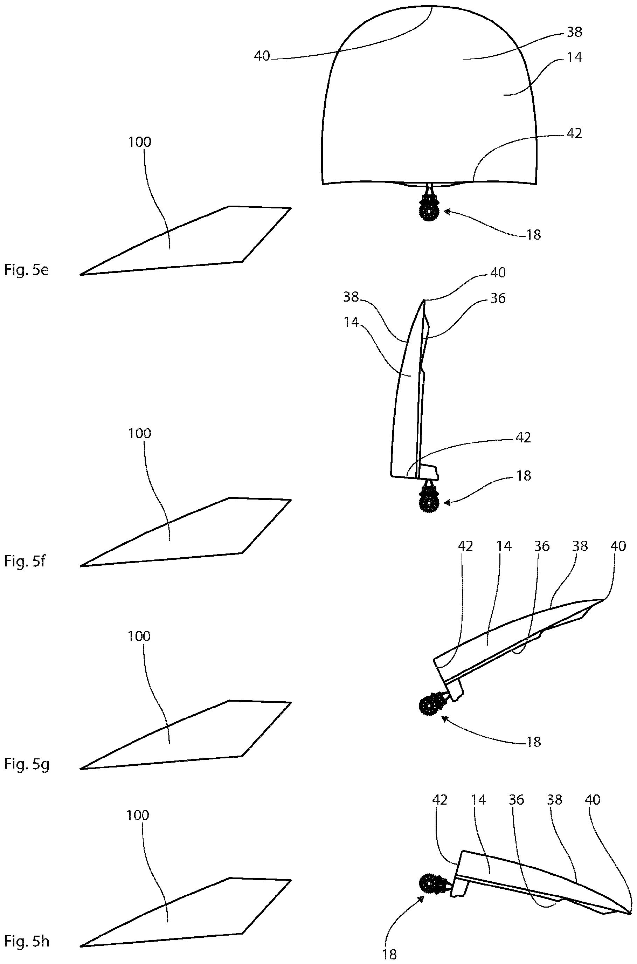

The hardtop 14 has a forward position and a rearward position relative to the automobile body 12. The forward position is shown in **Fig. 5a** and the rearward position is shown in **Fig. 5h****.** The hardtop connector 16 is covered from above by the hardtop 14 and the automobile body 12 in the forward position, as Shown in Fig. 1. The hardtop connector 16 can automatically transition the hardtop 14 between the forward position and the rearward position by a rotation around the first axis 22 of about 195°, as shown in **Figs. 5b to 5g****.** The hardtop 14 has a forward orientation in the forward position and a rearward orientation in the rearward position. The hardtop connector 16 can automatically transition the hardtop 14 between the forward orientation and the rearward orientation by the rotation around the first axis 22 and a 180° rotation around the second axis 24.

The outer side 38 of the hardtop 14 faces upwards and the inner side 36 of the hardtop 14 faces downwards in the forward position and forward orientation, as show in Fig. 5a. The outer side 38 of the hardtop 14 faces upwards and the inner side 36 of the hardtop 14 faces downwards in the rearward position and the rearward orientation, as shown in Fig. 5h. The front end 40 of the hardtop 14 is closer to the front 26 of the automobile body 12 than the rear end 42 of the hardtop 14 in the forward position and in the forward orientation of the hardtop 14. The front end 40 of the hardtop 14 is closer to the rear 28 of the automobile body 12 than the rear end 42 of the hardtop 14 in the rearward position and the rearward orientation of the hardtop 14.

The hardtop 14 has a closed inclination relative to the second axis 24 and an open inclination relative to the second axis 24 and the arm 54 of the hardtop connector 16, as shown in Figs. 5b to 5h. The lever arrangement 58 has a spring arrangement 62 that biases the hardtop 14 to be in the open inclination.

The spring arrangement 62 has a rigid first lever section 102 and a rigid second lever section 104 that form part of the arm 54 and are coupled via the third revolute joint 60. The first lever section 102 forms a cam 106 that has a control surface 108. The spring arrangement further has a follower 110 and a spring 112 that biases the follower 110 against the control surface 108 of the cam 106. The follower 110 is rotationally fixed relative to the second lever section 104. The cam 106, follower 110, and spring 112 are arranged to cooperate to bias the first lever section 102 to be in a start orientation relative to the second lever section 104. The third revolute joint 60 is coupled to the first bracket 50 via the second lever section 104 and to the second bracket 52 via the first lever section 102. The spring arrangement 62 biases the hardtop 14 to be in the open inclination when the first lever section 102 is biased to be in a start orientation relative to the second lever section 104.

In the forward position and the closed inclination, the hardtop 14 contacts the automobile body 12 at the front end 40 and the rear end 42 of the hardtop 14, as shown in Fig. 1. In the forward position and the open inclination, the hardtop 14 contacts the windshield 100 of the automobile body 12 at the front end 40 of the hardtop 14, as shown in Fig. 5b, and has a clearance to the automobile body 12 at the rear end 42 of the hardtop 14. The lever arrangement 58 biases the front end 40 of the hardtop 14 against the windshield 100 in the forward position and at a transition between the closed inclination and the open inclination. In the forward position, the hardtop 14 transitions between the closed inclination and the open inclination at a rotation around the first axis 22 and a rotation around the third axis 56. This way, the lever arrangement 58 is adapted to transition the hardtop 14 from the closed inclination to the open inclination at a transition from the forward position to the rearwards position. The hardtop 14 is fully closed in the closed inclination, forward position, and forward orientation.

The third axis 56 and the third revolute joint 60 are located at a lower level than the first axis 22 and the first revolute joint 46 in the forward position and closed inclination of the hardtop 14. The third axis 56 and third revolute joint 60 are located at the same level as the first axis 22 and the first revolute joint 46 in the forward position and open inclination of the hardtop 14. The hardtop 14 moves forward at the transition from the closed inclination to the open inclination in the forward position of the hardtop 14, as can be seen in Figs. 5a and 5b.

With the above-described features, the control unit 44 can automatically operate the the actuator arrangement 20 of the hardtop connector 16 to transition the hardtop 14 between the forward position and the rearward position and between the forward orientation and the rearward orientation. The joint arrangement 18 allows a rotation of the hardtop 14 around the first axis 22 that is unconstrained by the joint arrangement 18 as such and constrained by the automobile body 12. It also allows a rotation of the hardtop 14 around the second axis 24 that is unconstrained by the joint arrangement 18 as such and constrained by the automobile body 12 depending on the inclination of the second axis 24.

The hardtop 14 has an intermediate position relative to the automobile body 12, see Figs. 5d to 5f. The intermediate position is reached by a rotation around the first axis 22 in the transition between the forward position and the rearward position. The arm 54 of the joint arrangement 18 gives the hardtop 14 a clearance to the automobile body 12 that allows for a 360° rotation around the second axis 24 in the intermediate position.

The control unit 44 has different modes of operation. In a first mode, the control unit 44 operates the first actuator 64 and the second actuator 70 to rotate the first input gear 78 and the second input gear 80 at the same rate, or synchronously, and in the same direction relative to the first axis 22. This causes the hardtop 14 to rotate around first axis 22, as shown in Figs. 5a to 5d and 5f to 5h. In a second mode, the control unit 44 operates the first actuator 64 and the second actuator 70 to rotate the first input gear 78 and the second input gear 80 at different rates and in the same direction relative to the first axis 22. This causes the hardtop 14 to rotate around first axis 22 and around the second axis 24. In a third mode, the control unit 44 operates the first actuator 64 and the second actuator 70 to rotate the first input gear 78 and to hold the second input gear 80 still, or vice versa. This causes the hardtop 14 to rotate around first axis 22 and around the second axis 24. The rotation around the first axis 22 is slower and the rotation around the second axis 24 is faster than in the second mode of operation for the same rotational rate of the first input gear 78. In a fourth mode, the control unit 44 operates the first actuator 64 and the second actuator 70 to rotate the first input gear 78 and the second input gear 80 at the same rate and in opposite directions. This will cause the hardtop 14 to rotate around second axis 24, as shown in Figs. 5d to 5f. In a fifth mode, the control unit 44 operates the first actuator 64 and the second actuator 70 to rotate the first input gear 78 and the second input gear 80 at different rates and in opposite directions. This causes the hardtop 14 to rotate around first axis 22 and around the second axis 24 in the same direction as the input gear 78 or 80 that has the highest rotational rate. The rotation around the first axis 22 will be slower and the rotation around the second axis 24 will be faster than in the second mode of operation for same rotational rates of the first input gear 78 and the second input gear 80.

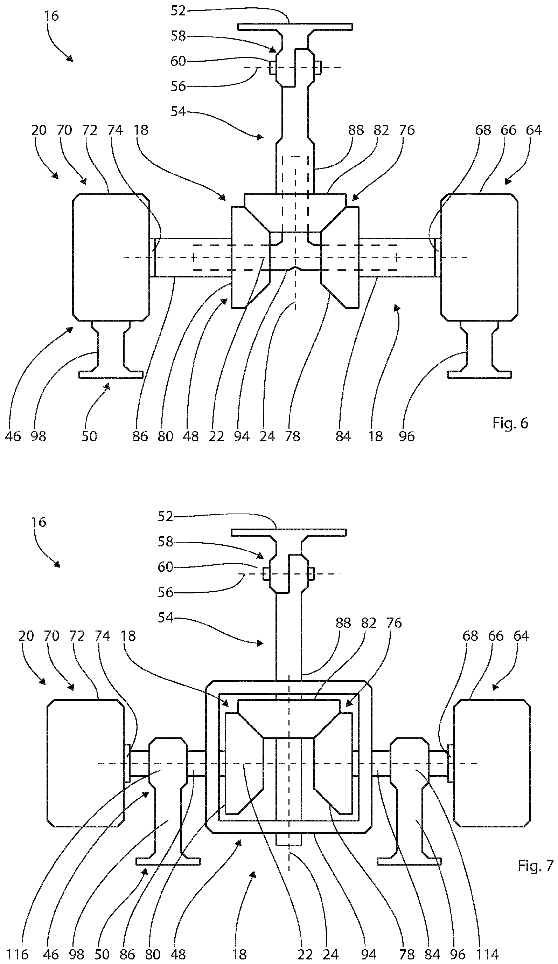

An alternative embodiment of a hardtop connector 16 is shown in **Fig. 6****.** The hardtop connector 16 is depicted without the control unit. The control unit (not shown) is arranged in an analogous manner to the control unit 44 in the embodiment of Fig. 2. The hardtop connector 16 of Fig. 6 differs from the one of Fig. 2 in that the first input shaft 84 is connected directly to the rotor 68 of the first actuator 64 and the second input shaft 86 is connected directly to the rotor 74 of the second actuator 70. The first bracket 50 has a first bracket part 96 and a second bracket part 98. The first bracket part 96 connects the stator 66 of the first actuator 64 to the automobile body (not shown), and the second bracket part 96 connects the stator 72 of the second actuator 70 to the automobile body (not shown). This way the first actuator 64 is positioned between the first bracket part 96 of the first bracket 50 and the gear mechanism 76, and the second actuator 70 is positioned between the second bracket part 98 of the first bracket 50 and the gear mechanism 76, and the first actuator 64 and the second actuator 70 jointly form the first revolute joint 46.

An alternative embodiment of a hardtop connector 16 is shown in **Fig. 7****.** The hardtop connector 16 is depicted without the control unit. The control unit (not shown) is arranged in an analogous manner to the control unit 44 in the embodiment of Fig. 2. The hardtop connector 16 of Fig. 7 differs from the one of Fig. 2 in that the support structure 94 is an external support structure 94 relative to the gears 78, 80, and 82 with the first input shaft 84, the second input shaft 86, and the output shaft 88 extending through the support structure 94. As in the embodiment of Fig. 2, the support structure 94 rotates together with the hardtop (not shown) around the second axis 24. Additionally, the first input shaft 84 is connected directly to the rotor 68 of the first actuator 64 and the second input shaft 86 is connected directly to the rotor 74 of the second actuator 70. The stator 66 of the first actuator 66 is fixed to the automobile body 12 and the stator 72 of the second actuator 70 is fixed to the automobile body 12.

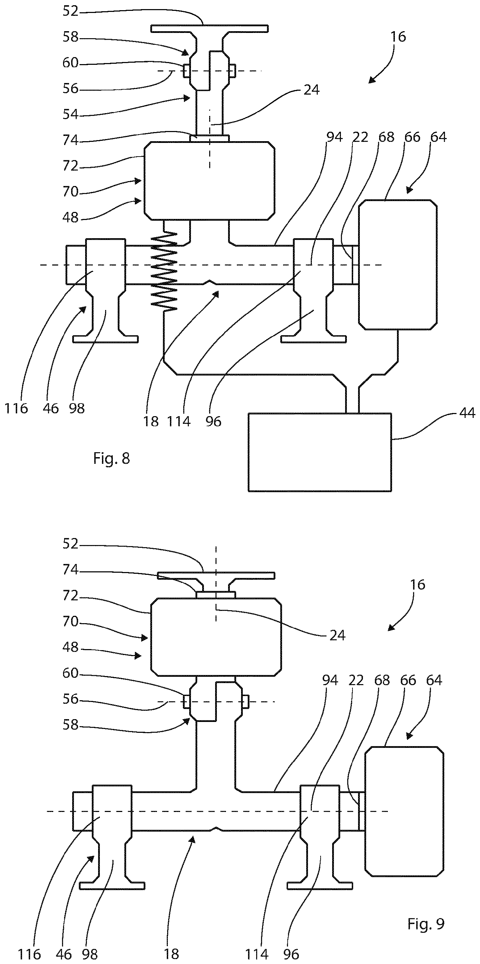

An alternative embodiment of a hardtop connector 16 is shown in **Fig. 8****.** The control unit 44 is connected as described in relation to Fig. 2. The joint arrangement 18 has a rigid support structure 94 that is coupled to the automobile body (not shown) via the first revolute joint 46 and can rotate around the first axis 22. The hardtop connector 16 has an arm 54 that extends transversely to the first axis 22 and the support structure 94 forms part of the arm 54.

The first actuator 64 is a rotary actuator that has a stator 66 and a rotor 68, and the support structure 94 is connected directly to the rotor 68. The stator of the first actuator 64 is fixed to the automobile body (not shown). The rotor 68 of the first actuator 64 is centered on the first axis 22. The first revolute joint 46 is connected directly to the support structure 94 and to the first bracket 50. The first bracket 50 is in turn connected to the automobile body (not shown). This way, the first actuator 64 is arranged to supply a first torque to the support structure 94 for rotating the hardtop (not shown) around the first axis 22.

The second actuator 70 is a rotary actuator that has a stator 72 and a rotor 74. The support structure 94 is connected to the second revolute joint 48, the second revolute joint 48 is connected to the lever arrangement 58, which in turn is connected to the to the second bracket 52. The second actuator 70 is supported by the joint arrangement 18 and forms part of the second revolute joint 48 with the stator 72 connected to the support structure 94 and the rotor 74 connected to the lever arrangement 58. This way, the second revolute joint 48 forms part of the arm 54, and the second actuator 70 is arranged to supply the second torque to the joint arrangement 18 between the support structure 84 and the lever arrangement 58 for rotating the hardtop (not shown) around the second axis 24. In an alternative embodiment (not shown), the second actuator 70 does not form part of the second revolute joint 48. Instead, the stator 72 of the second actuator 70 is fixed to the support structure 94 and a second geartrain (not shown) connects the rotor 74 of the second actuator 70 to the joint arrangement 18 between the second revolute joint 48 and the lever arrangement 58.

The control unit 44 has different modes of operation. In a first mode, the control unit 44 operates only the first actuator 64 which causes the hardtop (not shown) to rotate around first axis 22. In a second mode, the control unit 44 operates only the second actuator 70, which causes the hardtop (not shown) to rotate around second axis 24. In a third mode, the control unit 44 operates both the first actuator 64 and the second actuator 70, which causes the hardtop (not shown) to simultaneously rotate around first axis 22 and the second axis 24.

An alternative embodiment of a hardtop connector 16 is shown in Fig. 9. It has a control unit (not shown) arranged in an analogous manner to the control unit 44 of Fig. 8. The hardtop connector 16 differs from the hardtop connector 16 of Fig. 8 in that the support structure 94 is connected to the third revolute joint 60, the third revolute joint 60 is connected to the second revolute joint 48, and the second revolute joint 48 is connected to the second bracket 52. The second actuator 70 is supported by the joint arrangement 18 and forms part of the second revolute joint 48 with the stator 72 connected to the lever arrangement 58 and the rotor 74 connected to the second revolute joint 48. This way, the second actuator 70 is arranged to supply the second torque to the joint arrangement 18 between the lever arrangement 58 and the second bracket 52. In an alternative embodiment (not shown), the second actuator 70 does not form part of the second revolute joint 48. Instead, the stator 72 of the second actuator 70 is fixed to the support structure 94 between the third revolute joint 60 and the lever arrangement 58, and a second geartrain (not shown) connects the rotor 74 of the second actuator 70 to the joint arrangement 18 between the second revolute joint 48 and the second bracket 52.

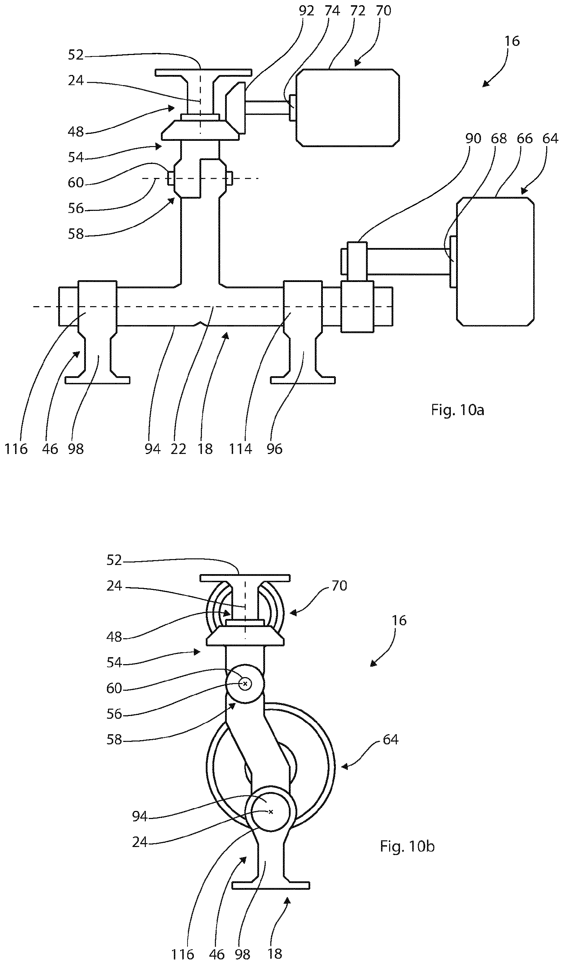

An alternative embodiment of a hardtop connector 16 is shown in **Figs. 10a and 10b****.** It has a control unit (not shown) arranged in an analogous manner to the control unit 44 of Fig. 8. The hardtop connector 16 differs from the hardtop connector 16 of Fig. 9 in that the stator 66 of the first actuator 64 is fixed to the automobile body (not shown) and the rotor 68 of the first actuator 64 is connected to the support structure 94 by a first geartrain 90 by which the first actuator 64 can supply a first torque for rotating the hardtop (not shown) around the first axis 22. The stator 72 of the second actuator 70 is fixed to the hardtop (not shown) and a second geartrain 92 connects the rotor 74 of the second actuator 70 to the joint arrangement 18 between the third revolute joint 60 and the second revolute joint 48. This way, the second actuator 70 is arranged to supply a second torque to the joint arrangement 18 to rotate the hardtop (not shown) around the second axis 24. A front view of the hardtop connector 16 is shown in Fig. 10a and a side view of the hardtop connector 16 is shown in Fig 10b. The hardtop connector 16 further differs from the previous embodiments of Figs. 8 and 9 in that the first axis 22 and the second axis 24 are non-coplanar, as can be seen in Fig. 10b.

### ITEM LIST

10 automobile
12 automobile body
14 hardtop
16 hardtop connector
18 joint arrangement
20 actuator arrangement
22 first axis
24 second axis
26 front of automobile
28 rear of automobile
30 passenger compartment
32 front end of passenger compartment
34 rear end of passenger compartment
36 inner side of hardtop
38 outer side of hardtop
40 front end of hardtop
42 rear end of hardtop
44 control unit
46 first revolute joint
48 second revolute joint
50 first bracket
52 second bracket
54 arm
56 third axis
58 lever arrangement
60 third revolute joint
62 spring arrangement
64 first actuator
66 stator of first actuator
68 rotor of first actuator
70 second actuator
72 stator of second actuator
74 rotor of second actuator
76 gear mechanism
78 first input gear
80 second input gear
82 output gear
84 first input shaft
86 second input shaft
88 output shaft
90 first geartrain
92 second geartrain
94 support structure
96 first bracket part
98 second bracket part
100 windshield
102 first lever section
104 second lever section
106 cam
108 control surface
110 follower
112 spring
114 first joint part
116 second joint part
118 left side

## Claims

1. A hardtop connector (16) for manipulating a retractable hardtop (14) relative to an automobile body (12), the hardtop connector (16) comprises:
- a mechanical joint arrangement (18), and an
- actuator arrangement (20), wherein
the hardtop connector (16) is adapted to be connected to the hardtop (14) and the automobile body (12), the joint arrangement (18) and the actuator arrangement (20) are arranged to cooperate to rotate the hardtop (14) around a first axis (22) and around a second axis (24), and the second axis (24) is transverse to the first axis (22).

2. An automobile (10) that comprises: an automobile body (12), a retractable hardtop (14), and a hardtop connector (16) according to claim 1, wherein the hardtop connector (16) is connected to the hardtop (14) and the automobile body (12) and arranged to manipulate the hardtop (14) relative to the automobile body (12).

3. The automobile (10) according to claim 2, wherein the hardtop (14) is a rigid and non-articulated structure.

4. The automobile (10) according to claim 2 or 3, wherein the hardtop (14) has a forward position and a rearward position relative to the automobile body (12), and the hardtop connector (16) is adapted to transition the hardtop (14) between the forward position and the rearward position by a rotation around the first axis (22).

5. The automobile (10) according to claim 4, wherein the hardtop (14) has a forward orientation in the forward position and a rearward orientation in the rearward position, and the hardtop connector (16) is adapted to transition the hardtop (14) between the forward orientation and the rearward orientation by a rotation around the first axis (22) and a rotation around the second axis (24).

6. The automobile (10) according to claim 5, wherein the hardtop (14) has an inner side (36) and an outer side (38), the outer side (38) faces upwards and the inner side (36) faces downwards in the forward position, and the outer side (38) faces upwards and the inner side (36) faces downwards in the rearward position.

7. The automobile (10) according to any of the claims 4 to 6, wherein the first axis (22) is fixed relative to the automobile body (12) at a transition between the forward position and the rearward position of the hardtop (14), and the second axis (24) rotates relative to the first axis (22) at a transition between the forward position and the rearward position of the hardtop (14).

8. The automobile (10) according to claim 7, wherein the joint arrangement (18) has a first revolute joint (46) and a second revolute joint (48), the first revolute joint (46) is arranged to allow the hardtop (14) to rotate around the first axis (22) and the second revolute joint (48) is arranged to allow the hardtop (14) to rotate around the second axis (24).

9. The automobile (10) according to claim 7 or 8, wherein the joint arrangement (18) has a lever arrangement (58) arranged to allow the hardtop (14) to tilt relative to the second axis (24).

10. The automobile (10) according to claim 9, wherein the lever arrangement (58) is arranged to tilt the hardtop (14) around a third axis relative to the second axis (24), the third axis is transverse to the second axis (24), and the first axis (22) and the third axis are aligned in the forward position and the rearward position of the hardtop (14).

11. The automobile (10) according to claim 9 or 10, wherein the hardtop (14) has a closed inclination and an open inclination relative to the second axis (24), and the lever arrangement (58) is arranged to bias the hardtop (14) to be in the open inclination, the hardtop connector (16) is adapted to transition the hardtop (14) between the closed inclination and the open inclination at a transition from the forward position to the rearwards position and by a rotation around the first axis (22) and the third axis.

12. The automobile (10) according to any of the claims claim 2 to 9, wherein the actuator arrangement (20) comprises a first actuator (64) and a second actuator (70), the joint arrangement (18) comprises a gear mechanism (76), the gear mechanism (76) is arranged to receive a first torque from the first actuator (64) and a second torque from the second actuator (70) and to convert the first torque and/or the second torque to rotate the hardtop (14) around the second axis (24).

13. The automobile (10) according to claim 12, wherein the gear mechanism (76) has a first input gear (78), a second input gear (80), and an output gear (82), the first input gear (78) meshes with the output gear (82), the second input gear (80) meshes with the output gear (82), the first input gear (78) is coupled to the first actuator (64), the second input gear (80) is coupled to the second output gear (82), and the output gear (82) is coupled to the hardtop (14).

14. The automobile (10) according to claim 13, wherein the first input gear (78) and the second input gear (80) are centered on the first axis (22), the output gear (82) is centered on the second axis (24), and the first input gear (78) and the second input gear (80) are positioned on opposite sides of the output gear (82).

15. The automobile (10) according to claim 13 or 14, wherein the hardtop connector (16) comprises a control unit (44) that is operationally coupled to actuator arrangement (20), the control unit (44) has a mode of operation in which the control unit (44) operates the first actuator (64) and the second actuator (70) to rotate the first input gear (78) and the second input gear (80) at the same rate and in the same direction relative to the first axis (22), and the control unit (44) has an additional mode of operation in which the control unit (44) operates the first actuator (64) and the second actuator (70) to rotate the first input gear (78) and the second input gear (80) at the same rate and in opposite directions.
